# EUROPÄISCHE PATENTSCHRIFT

(11) **EP 0 730 948 B1**
(45) Veröffentlichungstag und Bekanntmachung des Hinweises auf die Patenterteilung: **21.11.2001**
(21) Anmeldenummer: 96103657.1
(22) Anmeldetag: 08.03.1996
(51) Int. Cl.: B29C 71/00, C08J 7/12

(54) **Verfahren zur diffusionsvermindernden Behandlung von zur Aufnahme von gasförmigen und/oder flüssigen Stoffen vorgesehenen Behältern**
Method for treatment to reduce diffusion of receptacles able to contain gaseous and/or liquid materials
Procédé pour le traitement afin de réduire la diffusion de récipients aptes à contenir des matières gazeuses et/ou liquides

(30) Priorität: 10.03.1995 DE 19508743
(43) Veröffentlichungstag der Anmeldung: 11.09.1996
(73) Patentinhaber: Probst, Werner, 61184 Karben (DE); Rossmanith, Erich, Dipl.-Ing., 97877 Wertheim-Waldenhausen (DE)
(72) Erfinder: Probst, Werner, 61184 Karben (DE); Rossmanith, Erich, Dipl.-Ing., 97877 Wertheim-Waldenhausen (DE)
(74) Vertreter: Weise, Reinhard, Dipl.-Ing.

(56) Entgegenhaltungen:
- EP-A- 0 566 883
- EP-A- 0 600 752
- EP-A- 0 611 791
- DE-A- 1 905 094
- DE-A- 3 415 381
- DE-A- 3 535 602
- US-A- 3 998 180

## Beschreibung

Die Erfindung betrifft ein Verfahren zur diffusionsvermindernden Behandlung von Kunststoffbehältern, die zur Aufnahme von gasförmigen und/oder flüssigen Stoffen vorgesehen sind, insbesondere von Kunststoff-Kraftstofftanks.

Bei bestimmten Kunststoffbehältern, wie beispielsweise Kraftstofftanks, besteht aufgrund der Natur der aufzunehmenden Flüssigkeiten und/oder Gasen das Bedürfnis, optimale Permeationswerte bzw. eine hohe Diffusionsdichte zu verwirklichen. Hierfür ist es bekannt, eine Behandlung mit einem fluorhaltigen Gas in Form eines sogenannten In-Line-Verfahrens oder eines sogenannten Off-Line-Verfahrens vorzunehmen.

Bei dem In-Line-Verfahren erfolgt beim Formen des Kunststoffteils eine Behandlung mit fluorhaltigem Gas, das einen hohen Druck aufweist. Nachteilig ist jedoch dabei, daß wegen des zeitlichen Ablaufs und des hohen Überdrucks (beim Blasen der Teile wird mit einem Überdruck von 10 bis 20 bar gearbeitet und ein fluorhaltiges Gas hinzugeben) und der noch hohen Temperatur der Kunststoffteile die Reaktion auf eine relativ kurze Einführungszeit und nur auf die Innenseite der Innenteile begrenzt ist. Wegen der auftretenden hohen Temperaturen kann es zudem zu einer Beschädigung der Kunststoffteile führen. Derartige Beschädigungen bestehen vor allem in dem Verbrennen der Oberfläche der Kunststoffbehälter und einer Verformung des Kunststoffbehälters aufgrund des sogenannten Memory-Effektes des Kunststoffmaterials. Dieser tritt auf, wenn bei der Weiterverarbeitung nach der formenden Herstellung des Kunststoffteils eine. Erhitzung über eine Grenztemperatur erfolgt, welche von dem jeweiligen Kunststoffteil und der jeweiligen Kunststoffart abhängt. Bei einer Erhitzung oberhalb dieser Grenztemperatur versucht das Kunststoffteil, eine der Ursprungsformen wieder anzunehmen, d. h. es deformiert sich.

Bei dem Off-Line-Verfahren wird zur schonenden Behandlung der Kunststoffteile mit einem niedrigen Druck und niedrigen Temperaturen gearbeitet. Der Gasdruck ist fest eingestellt, und die Verfahrensführung erfolgt über eine Steuerung der Temperatur des Behandlungsgases in einer Vakuumreaktionskammer. Als nachteilig hat sich dabei herausgestellt, daß sich hierdurch die Bedingungen für eine optimale Fluorschicht, nämlich keine zu starken Verbrennungen außen, keine "Graphitschicht-Bildung" außen und keine zu starke "Kraterbildung" usw., nicht produktionstechnisch zuverlässig kontrollieren lassen und demgemäß keine gleichbleibenden, permanent reproduzierbaren und für Fluorbeschichtung maximalen Permeationsreduzierungswerte erreichen lassen.

Das Problem bei den vorbekannten Verfahren zur diffusionsmindernden Behandlung von Kunststoffbehältern bestand somit darin, daß einerseits zur besseren Fluorierung die Temperatur der Behandlungsteile so hoch wie möglich zu halten ist, andererseits jedoch bei der Verwendung der Behandlungsgastemperatur als Steuerparameter oberflächenschädigende Reaktionen wegen der schlechten Kontrollierbarkeit der Erwärmung auftreten können, die die Oberfläche schädigen und somit die Eindringtiefe der Reaktion verhindern oder erschweren. Der optimale Schichtaufbau zur Erreichung der maximalen Permeationsreduzierung kann hierfür im Regelfall nur ein Zufallsprodukt sein, selbst wenn mit Stickstoff oder anderen Kühlmedien reguliert wird.

Es besteht daher ein Bedürfnis nach Schaffung eines prozeßtechnisch umsetzbaren Verfahrens der eingangs genannten Art, mit dem eine optimale Fluorbeschichtung erreicht werden kann.

Erfindungsgemäß wird dieses Ziel durch die im Patentanspruch 1 angegebenen Merkmale gelöst. Bevorzugte Merkmale, die die Erfindung vorteilhaft weiterbilden, sind den nachgeordneten Verfahrensansprüchen zu entnehmen.

In vorteilhafter Weise schafft die Erfindung somit ein Verfahren zur diffusionsvermindernden Behandlung von Kunststoffbehältern, die zur Aufnahme von gasförmigen und/oder flüssigen Stoffen vorgesehen sind, in einer Vakuumreaktionskammer mit einem Fluor-und/oder andere Gaskombinationen enthaltenden erhitzten Behandlungsgas, wobei ein geringer Anfangsdruck des Behandlungsgases in der Vakuumreaktionskammer zur Steuerung des durch exotherme Reaktion des Behandlungsgases mit der Kunststoffoberfläche verursachten Temperaturanstiegs derart erhöht wird, daß die Oberflächentemperatur des Kunststoffbehälters wenigstens überwiegend geringfügig unterhalb einer durch das Auftreten des sogenannten Memory-Effektes bei dem jeweiligen Kunststoffbehälter bestimmten Grenztemperatur liegt.

Die genannten Gaskombinationen können Fluor- bzw. Fluorstickstoffe und/oder Wasserstoff und weitere Gase enthalten.

Vorteilhaft wird damit eine Kunststoffoberflächentemperatursteuerung realisiert, mit der stufenweise oder kontinuierlich eine Fluorbeschichtung mit optimalen Permeationswerten, beispielsweise für den Kunststofftank, erreicht werden kann. Die erzielbare Fluorschicht weist außen keine zu starken Verbrennungen, keine "Graphitschicht-Bildung", keine zu starke "Kraterbildung" etc. auf, und dadurch, daß nicht auf einmal starke Fluormengen in der Vakuumkammer aufgebracht werden, sondern allmählich schrittweise oder kontinuierlich eine Anpassung an die Bedingungen für eine optimale Fluorschicht vorgenommen wird, können in günstiger Weise hinsichtlich der Permeationswerte optimale Fluorschicht-Aufbauten erreicht werden.

Es wird mit dem erfindungsgemäßen Verfahren erstmals möglich, reproduzierbare Diffusionswerte zu erreichen, die im Vergleich zu bisherigen Verfahren bis zu einem Faktor 20 geringer liegen. Für Kunststofftanks betrugen beispielsweise die Diffusionswerte, die mit den Verfahren nach dem Stand der Technik erreicht werden konnten, 0,2 g/Tank, während mit dem erfindungsgemäßen Verfahren Diffusionswerte von 0,01 g/Tank erreicht werden können.

Durch den geringen Anfangsdruck und damit der geringen anfallenden exothermen Reaktion bleiben die Oberflächen kälter, und das Material wird in der obersten Lage nicht verbrannt, was bisher zu einer amorphen Schutzschicht führte, wobei die tieferen Lagen nur noch schwierig von Fluorgas erreicht werden konnten und somit die Fluorierung ungünstiger trotz höherer Fluorgaseinsätze verlief. Im Gegensatz zu bisher bekannten Verfahren, die die Behandlungsgastemperatur als Regelparameter verwendeten, ist durch die erfindungsgemäße Verwendung der Oberflächentemperatur als Regelparameter das bisher existierende Problem der Oberflächenverbrennung zuverlässig gelöst. Mit dem erfindungsgemäßen Verfahren ist es möglich, mit unbeschädigter Oberfläche das Fluorgas sogar bei vergleichsweise geringeren Drücken als beim Stand der Technik tiefer eindringen zu lassen. Hinzukommt der auch kostenmäßig und hinsichtlich der Entsorgung relevante Gesichtspunkt, daß bei dem erfindungsgemäßen Verfahren trotz Erzielung von besseren kleineren Diffusionswerten im Vergleich zu vorbekannten Verfahren eine Fluorersparnis auftritt.

Gemäß einer bevorzugten Weiterbildung der Erfindung wird der geringe Anfangsdruck des Behandlungsgases, der vorzugsweise in dem Bereich von 55 bis 165 Millibar gewählt wird, allmählich stufenweise oder kontinuierlich unter Berücksichtigung der dadurch verursachten Temperaturanstiege an der Oberfläche des Kunststoffbehälters erhöht, wobei bei stufenweiser Erhöhung der erhöhte Druck für eine bestimmte Zeitdauer abhängig von der resultierenden Oberflächentemperatur gehalten wird.

Nach einer günstigen Weiterbildung der Erfindung ist es ferner für die Wirksamkeit des Verfahrens von Vorteil, wenn eine gleichmäßige Behandlungsgastemperatur, eine homogene Behandlungsgaszusammensetzung und eine gute turbulenzarme Durchflutung der Vakuumreaktionskammer erfolgt. Die hierfür vorgesehene Zirkulierung des Behandlungsgases ermöglicht eine temperaturstabilisierende Aufheizung und Steuerung der Behandlungsgaszusammensetzung außerhalb der Vakuumreaktionskammer, wobei für die Zirkulierung selbst eine Gasumwälzpumpe eingesetzt werden kann. Vorteilhaft ist weiterhin, wenn beim Zirkulieren eine Reinigung des Behandlungsgases vorgenommen wird. Außerdem muß für eine optimale Formgebung der Vakuumsreaktionskammer zwecks besserer Durchflutung gesorgt werden.

Gemäß einer weiteren bevorzugten Ausgestaltung der Erfindung wird dem Kunststoffbehälter vor dem Fluorieren wenigstens ein Additiv vorzugsweise mit einem Anteil von 0,5 bis 2 % des Kunststoffbehältermaterials zugesetzt. Weiterhin kann vorteilhaft auch noch dem Behandlungsgas ein Nukleierungsmittel zugesetzt werden.

Mit den vorgesehenen Additiven lassen sich die Bearbeitungseigenschaften modifizieren. Die angesprochenen Nukleierungsadditive dienen dazu, durch die Erhöhung der Keimzahl zu höherer Kristallität zu gelangen und die physikalischen Werte zu verbessern. Durch den Einsatz des Additivs vor dem Fluorieren wird bereits auch ohne den weiteren Einsatz eines Nukleierungsmittels eine Erhöhung der Sperrschicht, eine Verbesserung der Stabilität des Kunststoffbehälters, eine höhere Produktionsausstoßgeschwindigkeit sowie eine bessere Verformung erreicht, die mit einer gleichmäßigeren Gestaltung der Kunststoffdicke des Kunststoffbehälters an allen Flächen, Kurven und Rundungen einhergeht.

Für die optimale Behandlung des Kunststoffbehälters in einem engen optimalen Temperaturbereich unterhalb seiner Grenztemperatur und hinsichtlich einer produktionstechnisch wichtigen Optimierung der Behandlungsdauer ist es weiterhin günstig, wenn der zu behandelnde Kunststoffbehälter vor Behandlungsbeginn auf eine Temperatur geringfügig unterhalb der Grenztemperatur aufgeheizt wird, wobei diese Voraufheizung vorzugsweise bereits in der Vakuumreaktionskammer in einer Phase verläuft, in der die Vakuumreaktionskammer evakuiert, belüftet und erneut evakuiert wird, um zu Behandlungsbeginn verunreinigungsfreie Verfahrensbedingungen in der Vakuumreaktionskammer zu schaffen. Bevorzugt erfolgt dabei das Belüften der Vakuumreaktionskammer mit Schutzgas, und nach Behandlungsende wird die Vakuumreaktionskammer wiederum evakuiert, belüftet und erneut evakuiert, um sicherzustellen, daß bei der Entnahme des behandelten Kunststoffbehälters keine Behandlungsgasreste unkontrolliert austreten können und der vorgeschriebene MAK-Wert eingehalten wird.

Während der Durchführung des Verfahrens sind kurze Überschreitungen des Grenztemperaturwertes unkritisch. Der temperaturmäßige Behandlungsbereich liegt vorzugsweise in einem Bereich zwischen 45 bis 70 °C, wobei für Kunststofftanks die untere Bereichsgrenze durch Automobilsicherheitsforderungen gegeben ist, und wobei sich die obere Bereichsgrenze aus der individuellen Grenztemperatur ergibt.

Gemäß einer bevorzugten Weiterbildung der Erfindung wird das Behandlungsgas zur Druckerhöhung über ein Ventil entsprechend einer Temperaturänderung an der Oberfläche des Kunststoffbehälters zugeführt, und diese Zuführung wird bei drohender zu starker Erwärmung verringert. Vorteilhaft wird zudem die Temperatur des Behandlungsgases unterhalb der Oberflächentemperatur des Kunststoffbehälters eingestellt, um beispielsweise im Fall einer kurzen Überschießung über die Grenztemperatur Wärme durch das Behandlungsgas abführen zu können. Außerdem läßt sich dadurch die Oberflächentemperatur des Kunststoffbehälters besser steuern, wenn bei der vorgesehenen Druckerhöhung durch die exotherme Reaktion des Behandlungsgases (HF) mit der Kunststoffoberfläche ein Temperaturanstieg erfolgt.

Gemessen wird die Oberflächentemperatur des Kunststoffbehälters mit wenigstens einem Oberflächenthermometer, beispielsweise einem Widerstandsthermometer, an der Oberseite des Kunststoffbehälters. Alternativ ist vorteilhaft vorgesehen, daß die Oberflächentemperatur des Kunststoffbehälters berührungslos von der Außenseite der Vakuumreaktionskammer gemessen wird, beispielsweise mittels Infrarot durch ein Schauglas der Vakuumreaktionskammer.

Gemäß einer vorteilhaften weiteren Ausgestaltung der Erfindung wird die Vakuumreaktionskammer mit Warmwasser, vorzugsweise in einem Bereich von 30 bis 90 °C, beheizt, um einen homogenen Temperaturgradienten für die verfahrensmäßige Behandlung zu erzielen.

Die für den jeweiligen Kunststoffbehältertyp erforderliche Behandlungszeit ist von der Behandlungstemperatur abhängig. Sie wird für die verschiedenen Kunststoffbehältertypen empirisch ermittelt, wobei zur empirischen Ermittlung der Behandlungszeit speziell von Kunststoffbenzintanks an Mustern derselben die Benzinaufnahme nach verschiedenen zuvor erfolgten Behandlungsdauern ermittelt wird. Hierzu dient bevorzugt als Schnellmeßverfahren der sogenannte Dosentest, bei dem eine kreisrunde Fläche mit einem Durchmesser von etwa 6 cm aus einem diffusionsvermindernd behandelten Tank geschnitten, auf einer MY-Waage gewogen und dann auf ein offenes Gefäß gepreßt wird, das zum Teil mit Kraftstoff gefüllt ist. Dieses Gefäß wird dann etwa 2,5 Stunden lang bei 40 °C in einen Temperierofen gestellt. Eine Entfernung des Testteils erfolgt nach einer Abkühlzeit von 0,5 Stunden, wonach dann die Gewichtszunahme zur Ermittlung der Aufnahme pro cm² gemessen wird.

Gemäß einer weiteren bevorzugten Ausgestaltung der Erfindung werden wenigstens die Temperatur und der Druck des Behandlungsgases mit Hilfe eines Rechners so geregelt, daß trotz hohem Fluorgasanteil im Kunststoffteil keine Oberflächenbeschädigung durch Überhitzung auftritt. Darüberhinaus besteht in günstiger Weise auch die Möglichkeit, weitere den Ablauf des Verfahrens bestimmende Komponenten, wie beispielsweise die Zusammensetzung des Behandlungsgases, die Steuerung der Vorphase und der Nachphase vor der eigentlichen Behandlung sowie die Behandlungsdauer, mit einem Prozeßrechner zu steuern, um einen auf den individuellen Kunststoffbehältertyp abgestimmten Verfahrensablauf zu automatisieren, wobei variable Prozeßdaten entsprechend eingegeben .werden und der Verfahrensablauf bevorzugt in Form eines visualisierten Programmablaufs dargestellt wird. Außerdem kann der Rechner zur elektrischen Überwachung aller sicherheitsrelevanten Verfahrensparameter eingesetzt und selbständig mechanische zusätzliche Absicherungen kontrollieren.

Nachfolgend wird die Erfindung unter Bezugnahme auf die beigefügten Figuren näher erläutert. Es zeigen:
- Fig. 1: eine schematisierte Darstellung einer Off-Line-Fluorierungsanlage zur Durchführung des erfindungsgemäßen Verfahrens; und
- Fig. 2: eine graphische Darstellung des Temperatur- und Druckverlaufs über der Zeit bei einer diffusionsvermindernden Behandlung von Kunststofftanks nach dem Stand der Technik und gemäß der Erfindung.

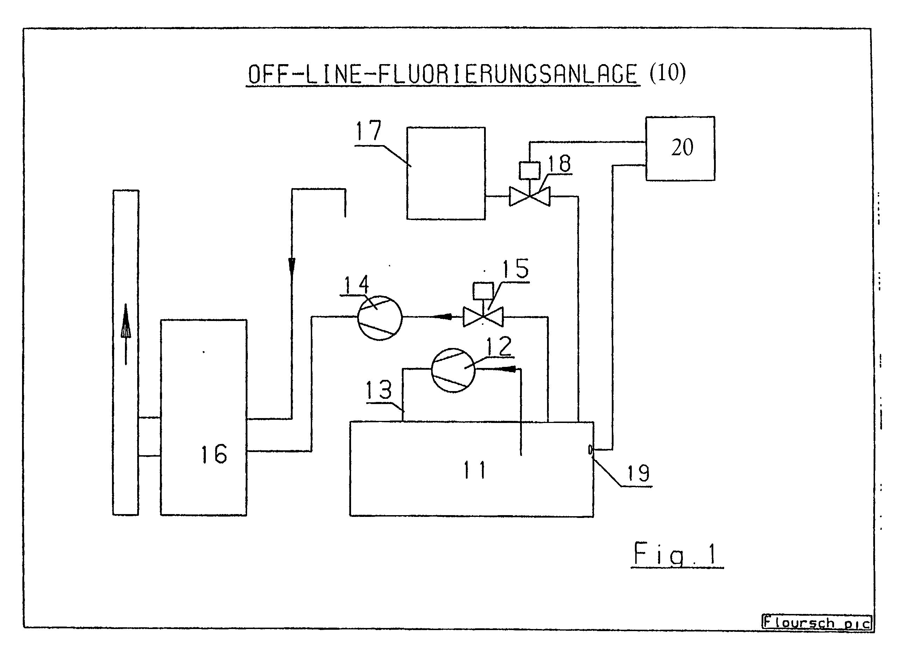

Das erfindungsgemäße Verfahren läßt sich beispielsweise mit der in Fig. 1 dargestellten Off-Line-Fluorierungsanlage durchführen. Fig. 1 zeigt schematisiert eine Anlage 10, mit der sich das erfindungsgemäße Verfahren durchführen läßt. Die Off-Line-Fluorierungsanlage 10 besitzt eine Vakuumreaktionskammer 11 und eine zugeordnete Umwälzpumpe 12 zum Zirkulieren des Behandlungsgases, wobei aus Vereinfachungsgründen elektromagnetische Leitungsventile in der Umwälzleitung 13 weggelassen sind. In nicht dargestellter Weise sind weiterhin mit der Umwälzleitung 13 eine steuerbare Aufheizeinrichtung für das Behandlungsgas und eine Homogenisiereinrichtung vorgesehen. Nicht dargestellt sind ferner speziell ausgestaltete Ein- und Auslaßöffnungen der Umwälzleitung 13, die für eine gute turbulenzarme Durchflutung der Vakuumreaktionskammer 11 sorgen. Mit 14 ist ein Vakuumpumpstand bezeichnet, mit dessen Hilfe über einen Elektromagneten 15 das Innere der Vakuumreaktionskammer 11 evakuierbar und über einen Absorber 16 entsorgbar ist. Mit 17 ist eine Einrichtung zur Herstellung und Temperierung sowie Druckversorgung mit fluorhaltigem Behandlungsgas bezeichnet, das der Vakuumreaktionskammer 11 über ein Elektromagnetventil 18 zugeführt werden kann.

Die Vakuumreaktionskammer 11 besitzt ferner eine Raumabsaugung 19. Mit 20 ist ein Prozeßrechner bezeichnet, der nicht nur mit dem Magnetventil 18 und der Raumabsaugung 19, sondern in nicht dargestellter Weise auch mit allen übrigen für den Ablauf des Verfahrens wichtigen Meß- und Steuergeräten, einschließlich einer oder mehreren nicht dargestelllten Oberflächentemperatursensoren, in Verbindung steht, wobei individuelle Daten des zu behandelnden Kunststofftanks usw. eingegeben werden können.

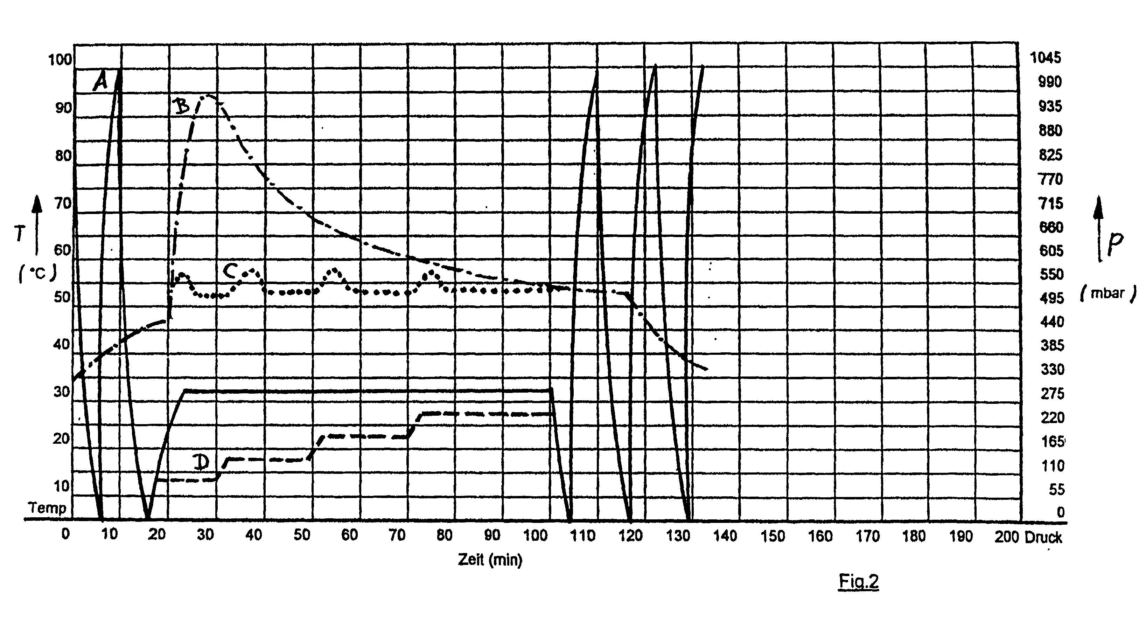

In Fig. 2 sind in einem Doppeldiagramm über die Abszisse Zeit (min) Temperaturkurven in °C und Druckkurven in Millibar aufgetragen, die einen vollständigen Behandlungszyklus für einen Kunststofftank, beginnend mit dem Einbringen desselben in die Vakuumreaktionskammer bis zu dessen Entnahme darstellen. Dabei sind zum besseren Vergleich des Verfahrensverlaufs des vorbekannten Off-Line-Fluorierungsverfahrens und des erfindungsgemäßen Off-Line-Fluorierungsverfahrens Unterschiede im Temperaturund Druckverlauf angegeben. Für das vorbekannte Verfahren sind der Druckverlauf durch eine geschlossene Linie A und der Temperaturverlauf durch eine Strichpunktlinie B angegeben. Der Temperaturverlauf gemäß dem erfindungsgemäßen Verfahren ist mit C bezeichnet, während der Druckverlauf gemäß der Erfindung, der in Relation zu der Oberflächentemperatur des Kunststoffbehälters steht, gestrichelt mit D bezeichnet ist.

Vergleicht man zunächst den Temperaturverlauf B, der bei dem vorbekannten Verfahren durch die Gasbehandlungstemperatur bestimmt ist, mit dem Temperaturverlauf C gemäß dem erfindungsgemäßen Verfahren, der durch die Oberflächentemperatur bestimmt ist, so läßt sich deutlich feststellen, daß der Temperaturverlauf bei dem erfindungsgemäßen Verfahren nach der Vorphase der Entlüftung, Belüftung und erneuten Belüftung, also etwa nach 20 min., in einem ganz engen Bereich überwiegend unterhalb der Grenztemperatur des zu behandelnden Kunststofftanks liegt, die hier bei etwa 55 °C liegt. Die Spitzen im Temperaturverlauf ergeben sich als Reaktion auf eine stufenweise Erhöhung des Drucks des Behandlungsgases (Kurve D), weil durch die exotherme Reaktion des Behandlungsgases mit der Kunststoffoberfläche dort ein Temperaturanstieg auftritt. Da jedoch die Temperatur des Behandlungsgases unterhalb der Grenztemperatur, insbesondere unterhalb der Oberflächentemperatur des Kunststoffteils liegt, kommt es zu einem schnellen Abbau der Temperaturspitze, so daß an der Oberfläche des Kunststoffteils keine Beschädigungen auftreten.

Ersichtlich wird beim erfindungsgemäßen Verfahren während der Behandlung mit einem deutlich niedrigeren Behandlungsgasdruck gearbeitet, und der energetische Beheizungsaufwand ist ebenfalls geringer. Nach Beendigung der Behandlung, also etwa in einer Zeit von 100 min., erfolgt ein mehrmaliges Evakuieren und Belüften der Vakuumreaktionskammer bei gleichzeitiger Temperaturverringerung, um den vorgeschriebenen MAK-Wert (Wert für maximale Arbeitsplatzkonzentration) an Resten des fluorhaltigen Behandlungsgases zu erreichen. Der fluorierte Behälter kann dann entnommen werden, und aus Sicherheitsgründen erfolgt eine weitere Spülung der Vakuumreaktionskammer durch einen etwa zehnmaligen Luftwechsel.

## Patentansprüche

1. Verfahren zur diffusionsvermindernden Behandlung von Kunststoffbehältern, die zur Aufnahme von gasförmigen und/oder flüssigen Stoffen vorgesehen sind, in einer Vakuumreaktionskammer (11) mit einem Fluor- und/oder andere Gaskombinationen enthaltenden erhitzten Behandlungsgas, wobei ein geringer Anfangsdruck des Behandlungsgases in der Vakuumreaktionskammer (11) zur Steuerung des durch exotherme Reaktion des Behandlungsgases mit der Kunststoffoberfläche verursachten Temperaturanstiegs erhöht wird, **dadurch gekennzeichnet, daß** die Oberflächentemperatur des Kunststoffbehälters wenigstens überwiegend geringfügig unterhalb einer durch das Auftreten des sogenannten Memory-Effektes bei dem jeweiligen Kunststoffbehälter bestimmten Grenztemperatur liegt.

2. Verfahren nach Anspruch 1, **dadurch gekennzeichnet, daß** der geringe Anfangsdruck des Behandlungsgases stufenweise erhöht wird.

3. Verfahren nach Anspruch 1, **dadurch gekennzeichnet, daß** der geringe Anfangsdruck des Behandlungsgases kontinuierlich erhöht wird.

4. Verfahren nach Anspruch 1, **dadurch gekennzeichnet, daß** das Behandlungsgas zwecks Aufheizung und Homogenisierung sowie für eine gute Durchflutung turbulenzarm durch die Vakuumreaktionskammer (11) zirkuliert wird.

5. Verfahren nach einem der vorangehenden Ansprüche, **dadurch gekennzeichnet, daß** der zu behandelnde Kunststoffbehälter vor Behandlungsbeginn auf eine Temperatur geringfügig unterhalb der Grenztemperatur geheizt wird.

6. Verfahren nach einem der vorangehenden Ansprüche, **dadurch gekennzeichnet, daß** die Temperatur des Behandlungsgases unterhalb der Oberflächentemperatur des Kunststoffbehälters eingestellt wird.

7. Verfahren nach einem der vorangehenden Ansprüche, **dadurch gekennzeichnet, daß** die Oberflächentemperatur des Kunststoffbehälters mit wenigstens einem Oberflächenthermometer gemessen wird.

8. Verfahren nach einem der Ansprüche 1 bis 6, **dadurch gekennzeichnet, daß** die Oberflächentemperatur des Kunststoffbehälters berührungslos von der Außenseite der Vakuumreaktionskammer (11) gemessen wird.

9. Verfahren nach einem der vorangehenden Ansprüche, **dadurch gekennzeichnet, daß** das Behandlungsgas zur Druckerhöhung über ein Ventil (18) entsprechend einer Temperaturänderung an der Oberfläche des Kunststoffbehälters zugeführt und die Zuführung bei drohender zu starker Erwärmung verringert wird.

10. Verfahren nach einem der vorangehenden Ansprüche, daß das Behandlungsgas beim Zirkulieren gereinigt wird.

11. Verfahren nach einem der vorangehenden Ansprüche, **dadurch gekennzeichnet, daß** dem Kunststoffbehälter vor dem Fluorieren ein Additiv zugesetzt wird.

12. Verfahren nach Anspruch 11, **dadurch gekennzeichnet, daß** etwa 0,5 bis 2,0 % des Kunststoffbehältermaterials an Additiven zugesetzt wird.

13. Verfahren nach einem der vorangehenden Ansprüche, **dadurch gekennzeichnet, daß** dem Behandlungsgas ein Nukleierungsmittel zugesetzt wird.

14. Verfahren nach einem der vorangehenden Ansprüche, **dadurch gekennzeichnet, daß** die Vakuumreaktionskammer (11) vor Behandlungsbeginn evakuiert, belüftet und erneut evakuiert wird.

15. Verfahren nach einem der vorangehenden Ansprüche, **dadurch gekennzeichnet, daß** zum Belüften der Vakuumreaktionskammer (11) Schutzgas verwendet wird.

16. Verfahren nach einem der vorangehenden Ansprüche, **dadurch gekennzeichnet, daß** für den geringen Anfangsdruck des Behandlungsgases eine Größe in dem Bereich von 55 bis 165 Millibar gewählt wird.

17. Verfahren nach einem der vorangehenden Ansprüche, **dadurch gekennzeichnet, daß** für den Behandlungsbereich eine Temperatur von etwa 45 bis 70 °C gewählt wird.

18. Verfahren nach einem der vorangehenden Ansprüche, **dadurch gekennzeichnet, daß** die Vakuumreaktionskammer (11) mit Warmwasser, vorzugsweise in einem Bereich von 30 bis 90 ° C, beheizt wird.

19. Verfahren nach einem der vorangehenden Ansprüche, **dadurch gekennzeichnet, daß** die Behandlungszeit für den jeweiligen Kunststoffbehältertyp empirisch ermittelt wird.

20. Verfahren nach Anspruch 19, **dadurch gekennzeichnet, daß** zur empirischen Ermittlung der Behandlungszeit von Kunststoffbenzintanks an Kunststoffbenzintankmustern die Benzinaufnahme nach verschiedenen zuvor erfolgten Behandlungsdauern zeitabhängig ermittelt wird.

21. Verfahren nach einem der vorangehenden Ansprüche, **dadurch gekennzeichnet, daß** wenigstens die Temperatur und der Druck des Behandlungsgases mit Hilfe eines Rechners (20) geregelt werden.

## Claims

1. A method for the treatment to reduce the diffusion of plastic containers designed to receive gaseous and/or liquid materials in a vacuum reaction chamber (11) with a heated treatment gas containing fluorine and/or other gas combinations, wherein a low initial pressure of the treatment gas in the vacuum reaction chamber (11) is increased to control the temperature increase caused by exothermal reaction of the treatment gas with the plastic surface, wherein the surface temperature of the plastic container is at least mainly slightly below a threshold temperature determined by the occurrence of a so-called memory effect in the respective plastic container.

2. A method according to claim 1, wherein the low initial pressure of the treatment gas is increased in a stepwise manner.

3. A method according to claim 1, wherein the low initial pressure of the treatment gas is continuously increased.

4. A method according to claim 1, wherein the treatment gas is circulated through the vacuum reaction chamber (11) for heating and homogenization and a good flow in a low-turbulence manner.

5. A method according to any of the preceding claims, wherein the plastic container to be treated is heated to a temperature slightly below the threshold temperature prior to the beginning of the treatment.

6. A method according to any of the preceding claims wherein the temperature of the treatment gas is adjusted to a temperature below the surface temperature of the plastic container.

7. A method according to any of the preceding claims, wherein the surface temperature of the plastic container is measured with at least one surface thermometer.

8. A method according to any of the claims 1 to 6, wherein the surface temperature of the plastic container is measured in a contact-free manner at the outside of the vacuum reaction chamber (11).

9. A method according to any of the preceding claims, wherein the treatment gas is added to increase the pressure via a valve (18) according to a temperature change at the surface of the plastic container and the addition is reduced if there is a risk of a too strong heating.

10. A method according to any of the preceding claims, wherein the treatment gas is purified during circulation.

11. A method according to any of the preceding claims, wherein the plastic container is added with an additive prior to fluorination.

12. A method according to claim 11, wherein about 0.5 to 2.0% of additives, based on the plastic container material, is added.

13. A method according to any of the preceding claims, wherein a nucleation agent is added to the treatment gas.

14. A method according to any of the preceding claims, wherein the vacuum reaction chamber (11) is evacuated, vented and again evacuated prior to the beginning of the treatment.

15. A method according to any of the preceding claims, wherein a protection gas is used to vent the vacuum reaction chamber (11).

16. A method according to any of the preceding claims, wherein for the low initial pressure of the treatment gas a value is selected in the range of 55 to 165 mbar.

17. A method according to any of the preceding claims, wherein for the treatment range a temperature of about 45 to 70°C is chosen.

18. A method according to any of the preceding claims, wherein the vacuum reaction chamber (11) is heated with warm water, preferably in a range of 30 to 90°C.

19. A method according to any of the preceding claims, wherein the treatment period for an individual plastic container type is determined in an empirical manner.

20. A method according to claim 19, wherein for the empirical determination of the treatment period of plastic fuel tanks the gasoline uptake is determined in a time-dependent manner after different treatment periods which have been carried out before with plastic gasoline tank specimens.

21. A method according to any of the preceding claims, wherein at least the temperature and the pressure of the treatment gas is controlled by means of a computer (20).

## Revendications

1. Procédé de traitement, réduisant la diffusion, de récipients en matière plastique qui sont prévus pour recevoir des substances gazeuses et/ou liquides, dans une chambre de réaction sous vide (11) et au moyen d'un gaz de traitement dont la température a été élevée et qui contient des combinaisons de fluor et/ou d'autres gaz, une faible pression initiale du gaz de traitement dans la chambre de réaction sous vide (11) faisant l'objet d'une augmentation pour commander l'augmentation de température due à une réaction exothermique du gaz de traitement avec la surface de matière plastique, **caractérisé en ce que** la température de surface du récipient en matière plastique est située, au moins d'une manière prépondérante, légèrement au-dessous d'une température limite déterminée par l'apparition de ce qu'il est convenu d'appeler l'effet de mémoire dans le récipient en matière plastique chaque fois considéré.

2. Procédé suivant la revendication 1, **caractérisé en ce que** la faible pression initiale du gaz de traitement est augmentée d'une manière étagée.

3. Procédé suivant la revendication 1, **caractérisé en ce que** la faible pression initiale du gaz de traitement est augmentée d'une manière continue.

4. Procédé suivant la revendication 1, **caractérisé en ce qu'**en vue de l'élévation de température et de l'homogénéisation, ainsi que pour une bonne traversée, le gaz de traitement est recyclé d'une manière dépourvue de turbulence à travers la chambre de réaction sous vide (11).

5. Procédé suivant l'une des revendications précédentes, **caractérisé en ce qu'**avant le début du traitement, la température du récipient en matière plastique à traiter est élevée à une température située légèrement au-dessous de la température limite.

6. Procédé suivant l'une des revendications précédentes, **caractérisé en ce que** la température du gaz de traitement est réglée au-dessous de la température de surface du récipient en matière plastique.

7. Procédé suivant l'une des revendications précédentes, **caractérisé en ce que** la température de surface du récipient en matière plastique est mesurée au moyen d'au moins un thermomètre de surface.

8. Procédé suivant l'une des revendications 1à 6, **caractérisé en ce que** la température de surface du récipient en matière plastique est mesurée, sans contact, à partir de la face extérieure de la chambre de réaction sous vide (11).

9. Procédé suivant l'une des revendications précédentes, **caractérisé en ce qu'**en vue de l'élévation de pression, le gaz de traitement est envoyé par l'intermédiaire d'une valve (18) sur la surface du récipient en matière plastique, d'une manière correspondant à une variation de température, et l'apport est réduit lorsqu'un échauffement trop prononcé menace.

10. Procédé suivant l'une des revendications précédentes, **caractérisé en ce que** le gaz de traitement est purifié lors de la circulation.

11. Procédé suivant l'une des revendications précédentes, **caractérisé en ce qu'**un additif est ajouté au récipient en matière plastique avant la fluoration.

12. Procédé suivant la revendication 11, **caractérisé en ce qu'**approximativement 0,5 à 2,0% d'additif vis-à-vis de la matière du récipient en matière plastique est ajouté.

13. Procédé suivant l'une des revendications précédentes, **caractérisé en ce qu'**un agent de nucléation est ajouté au gaz de traitement.

14. Procédé suivant l'une des revendications précédentes, **caractérisé en ce qu'**avant le début du traitement, on soumet la chambre de réaction sous vide (11) à une mise sous vide, à un passage d'air et de nouveau à une mise sous vide.

15. Procédé suivant l'une des revendications précédentes, **caractérisé en ce qu'**une atmosphère contrôlée est utilisée pour le passage d'air dans la chambre de réaction sous vide (11).

16. Procédé suivant l'une des revendications précédentes, **caractérisé en ce qu'**une valeur comprise dans la fourchette de 55 à 165 millibars est choisie pour la faible pression initiale du gaz de traitement.

17. Procédé suivant l'une des revendications précédentes, **caractérisé en ce qu'**une température d'approximativement 45 à 70 °C est choisie pour la fourchette de traitement.

18. Procédé suivant l'une des revendications précédentes, **caractérisé en ce que** la chambre de réaction sous vide (11) est chauffée au moyen d'eau chaude, de préférence dans une fourchette de 30 à 90 °C.

19. Procédé suivant l'une des revendications précédentes, **caractérisé en ce que** le temps de traitement est déterminé d'une manière empirique pour le type de récipient en matière plastique chaque fois considéré.

20. Procédé suivant la revendication 19, **caractérisé en ce que**, pour la détermination empirique du temps de traitement de réservoirs d'essence en matière plastique, la capacité d'absorption d'essence est déterminée en fonction du temps sur des modèles de réservoir d'essence en matière plastique d'après différentes durées de traitement ayant précédemment été utilisées avec succès.

21. Procédé suivant l'une des revendications précédentes, **caractérisé en ce qu'**au moins la température et la pression du gaz de traitement font l'objet d'une régulation au moyen d'un ordinateur (20).
